# EUROPEAN PATENT APPLICATION

(11) **EP 1 741 997 A2**
(43) Date of publication of application: **10.01.2007**
(21) Application number: 06014142.1
(22) Date of filing: 07.07.2006
(51) Int. Cl.: F25B 27/00, F24F 11/00

(54) **Cogeneration system and method for controlling the same**

(30) Priority: 08.07.2005 KR 20050061798
(71) Applicant: LG ELECTRONICS INC., Seoul 150-010 (KR)
(72) Inventor: Choi, Chang Min, Kwanak-ku Seoul 151-055 (KR); Choe, Yeoung Seop, Buchun-si Kyunggi-do 422-751 (KR); Choi, Won Jae, Seoul 143-210 (KR); Lee, Jae Won, Kuro-ku Seoul 152-092 (KR); Chung, Baik Young, Yongjong-dong Inchun-si 407-710 (KR); Chang, Se Dong, Kyungki-do 423-060 (KR)
(74) Representative: TER MEER - STEINMEISTER & PARTNER GbR

(57) **Abstract**

A cogeneration system (50,60,70) and a method for controlling the same have an advantage that it is easy to operate a cogeneration device because the operation of the cogeneration device can be controlled according to operation signals of an air conditioner (50), and have an effect that it is possible to make the best use of the generated electricity of the cogeneration device through an interconnection (91,92,93) between the air conditioner and the cogeneration device.

## Description

### BACKGROUND OF THE INVENTION

### 1. Field of the Invention

The present invention relates to a cogeneration system, and more particularly to, a cogeneration system, which operates an engine and a generator according to operation signals from an air conditioner, and which uses electricity produced by the generator and waste heat recovered by the engine for the air conditioner, thereby improving the efficiency of the system, and a method for controlling the same.

### 2. Description of the Background Art

In general, a cogeneration system is a system that can produce both electricity and heat from a single energy source. The electricity produced by the cogeneration system is supplied for use to electrical household appliances, such as various kinds of household lighting equipment, heat pump type air conditioners, and so on, and the heat source produced by the cogeneration system is used for hot water supply, warm water or the like.

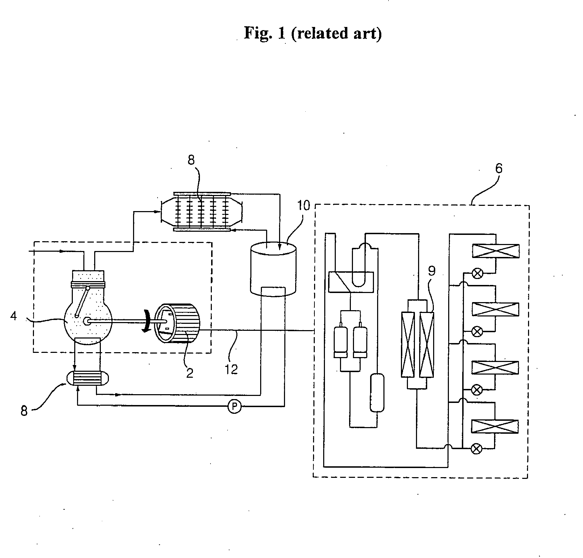

FIG. 1 is a block diagram schematically showing a cogeneration system in accordance with the prior art.

The cogeneration system in accordance with the prior art includes, as shown in FIG. 1, a generator 1 for producing electricity, an engine 4 for driving the generator 1, an air conditioner 6 driven by the electricity produced by the generator 2, waste heat recovery equipment 8 for recovering waste heat generated by the engine 4, and a heat demanding site 10, such as a heat storage tank, where waste heat is used.

The generator 2 and the air conditioner 6 are connected to a power line for supplying electricity.

In the cogeneration system thus constructed, when the engine 4 is operated, the generator 2 produces electricity by the driving force of the engine 4.

The electricity produced by the generator 2 is supplied to the air conditioner 6 via the power line 12, to thus operate the air conditioner 6.

The waste heat generated by the engine 4 is recovered by the waste heat recovery equipment 8, and used in the heat demanding site 10.

When the engine 4 is stopped, the generator 2 is also stopped, to thus stop the power supply to the air conditioner 6 from the generator 2.

However, the cogeneration system in accordance with the prior art has a problem in that only the electricity produced by the generator 2 is supplied to the air conditioner 6, and the waste heat recovered by the engine 4 is only utilized for hot water supply, warm water, or the like in the heat demanding site, so that it is impossible to maximize the efficiency of the system.

### SUMMARY OF THE INVENTION

The present invention has been made in an effort to solve the above prior art problem, and provide a cogeneration system, which can improve the efficiency of the system by supplying waste heat recovered from a driving source to a compressor suction side of an air conditioner, and which can remotely control the operations of an engine and a generator according to an operating state of the air conditioner, and a method for controlling the same.

To achieve these and other advantages and in accordance with the purpose of the present invention, as embodied and broadly described herein, there is provided a cogeneration system, including: a cogeneration device for supplying at least one of electricity and heat to an air conditioner; and a cogeneration device controller for controlling the operation of the cogeneration device according to operation signals from the air conditioner.

The cogeneration device controller is supplied with electricity from an external power source.

The cogeneration system further includes an air conditioner controller supplied with electricity from an en external power source, for controlling the air conditioner.

The air conditioner includes an indoor unit supplied with electricity from an external power source and an outdoor unit supplied with electricity from the generator, and the cogeneration device controller controls the operation of the cogeneration device according to operation signals from the indoor unit.

The air conditioner includes an indoor unit supplied with electricity from an external power source, an outdoor unit supplied with electricity from the generator, and a remote control for wirelessly operating the indoor unit, and the cogeneration device controller controls the operation of the cogeneration device according to operation signals from the indoor unit.

The cogeneration device includes a generator for generating electricity and a driving source for driving the generator and generating heat.

The cogeneration device controller controls the driving of the driving source according to the operation signals from the air conditioner.

The cogeneration device controller controls the power supply to the air conditioner from the generator according to the operation signals from the air conditioner.

The cogeneration system further includes a waste heat recovery unit for supplying waste heat recovered from the driving source to the air conditioner.

The air conditioner and the cogeneration device controller perform data communication by the RS-485 communication protocol.

The cogeneration system further includes a monitoring device connected to the cogeneration device controller, for monitoring the operations of the cogeneration device and the air conditioner.

In accordance with another aspect of the present invention, there is provided a method for controlling a cogeneration system, including: applying power to an indoor unit of an air conditioner and a controller of a cogeneration device from outside; transmitting operation signals from the indoor unit of the air conditioner to the controller of the cogeneration device; if the signal transmitted in the transmitting of operation signals is an ON signal, operating the cogeneration device by the controller of the cogeneration device; and operating the cogeneration device to supply produced electricity to an outdoor unit of the air conditioner.

If the operation signals outputted in the transmitting of an operation signal are OFF signals, the cogeneration device controller stops the cogeneration device.

If the operation signals outputted in the transmitting of operation signals are OFF signals, and the OFF signals are maintained for a predetermined time, the operation of the cogeneration device is stopped.

If the operation signals outputted in the transmitting of operation signals are OFF signals, the power supply from the cogeneration device to the outdoor unit is cut off, and thereafter, the driving source of the cogeneration device is stopped.

The cogeneration system and the method for controlling the same in accordance with the invention have an advantage that it is easy to operate the cogeneration device because the operation of the cogeneration device can be controlled according to operation signals of the air conditioner, and have an effect that it is possible to make the best use of the generated electricity of the cogeneration device through an interconnection between the air conditioner and the cogeneration device.

Additionally, the air conditioner controller and the cogeneration device controller are supplied with electricity from an external power source, and the compressor, fan, etc. of the air conditioner are supplied with electricity from the generator, so that it is possible to properly use the generated electricity of the cogeneration system and the external power source, thereby maximizing the utilization of the generated electricity of the cogeneration device and minimizing the utilization factor of the external power source by

Additionally, the suction side of the compressor is pre-heated using waste heat recovered b the engine of the cogeneration device, so that the efficiency of the compressor is improved, to thus reduce unnecessary waiting time when driving the cogeneration device.

Additionally, if the operation signals outputted to the cogeneration device controller from a plurality of remote controls are all OFF signals, and the OFF signals are maintained for a predetermined time, the operation of the cogeneration device is stopped, thereby preventing a malfunction thereof.

### BRIEF DESCRIPTION OF THE DRAWINGS

In the drawings:
FIG. 1 is a block diagram schematically showing a cogeneration system in accordance with the prior art;
FIG. 2 is a block diagram schematically showing a cogeneration system in accordance with the present invention; and
FIG. 3 is a sequential chart showing a method for controlling a cogeneration system in accordance with the present invention.

### DETAILED DESCRIPTION OF THE PREFERRED EMBODIMENTS

Hereinafter, an exemplary embodiment of a cogeneration system and a method for controlling the same in accordance with the invention will be described with reference to the accompanying drawings.

There may be a plurality of exemplary embodiments of the cogeneration system and the method for controlling the same in accordance with the invention, but the most preferred embodiment will be described hereinafter.

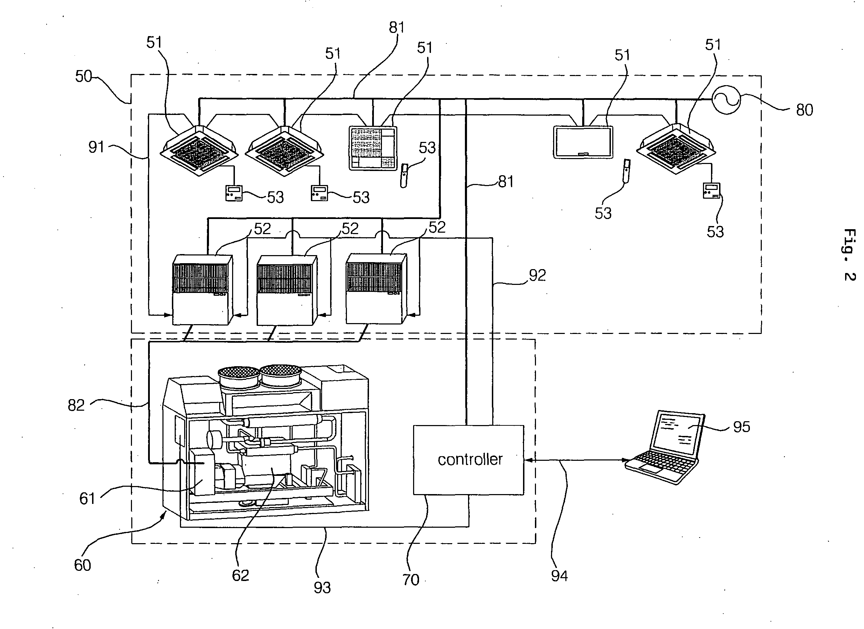

FIG. 2 is a block diagram schematically showing a cogeneration system in accordance with the present invention.

The cogeneration system in accordance with the invention, includes, as shown in FIG. 2, an air conditioner 50, a cogeneration device 60 for supplying electricity and heat to the air conditioner 50, and a controller 70 for controlling the operation of the cogeneration device 60 according to operation signals from the air conditioner 50.

A description of the air conditioner 50 will be made with respect to a heat pump type air conditioner.

The air conditioner 50 includes a plurality of indoor units 51 installed indoors and supplied with electricity from an external power source 80, a plurality of outdoor units 52 installed outdoors and supplied with electricity from the cogeneration device 60, and a plurality of remote controls for wirelessly operating the plurality of indoor units 51, respectively.

Here, the external power source 80 is a commercial power source that is supplied from an electric power company.

The air conditioner further includes a controller (not shown) supplied with electricity from the external power source 80, for controlling the operations of the indoor units 51 and the outdoor units 52. The air conditioner controller (not shown) is installed in each of the indoor units 51 and outdoor units 52.

Therefore, the plurality of indoor units 51 and outdoor units 52 are connected in parallel to the external power source 80 by a first power line 81.

The plurality of indoor units 51 and outdoor units 52 are connected in parallel by a first communication line 91 so as to perform data communication by the RS-485 communication protocol.

The cogeneration device 60 includes a generator 61 for generating electricity, a driving source for driving the generator 61 and generating heat, and a waste heat recovery unit (not shown) for recovering waste heat generated from the driving source and supplying the waste heat to the suction side of a compressor (not shown) in the outdoor units 52.

An engine 62, a fuel cell, or the like is used as the driving force, and thus a description thereof will be made with respect to the engine 62.

The cogeneration device 60 is connected to the outdoor units 52 by a second power line 82 so as to supply the electricity produced by the generator 61 to the outdoor units 52.

The cogeneration device controller 70 is connected to the external power source 80 by the first power line 81 so as to be supplied with electricity from the external power source 80.

The cogeneration device controller 70 controls the operation of the cogeneration device 60 according to operation signals from the air conditioner 50, and thus will be described with respect to a case in which the cogeneration device 70 is constructed so as to control the operation of the cogeneration device 60 by operation signals inputted from the remote controls 53.

The cogeneration device controller 70 and the outdoor units 52 are connected by a second communication line 92 so as to perform data communication by the RS-485 communication protocol, while the cogeneration device controller 70, the generator 61, and the engine 62 are connected by a third communication line 93 so as to perform data communication by the RS-232 communication protocol.

Additionally, the cogeneration system further includes a monitoring device connected to the cogeneration device controller 70 by a fourth communication line 94, for monitoring the operations of the cogeneration device 60 and the air conditioner 50.

The method for controlling the thus-constructed cogeneration system in accordance with the invention will now be described.

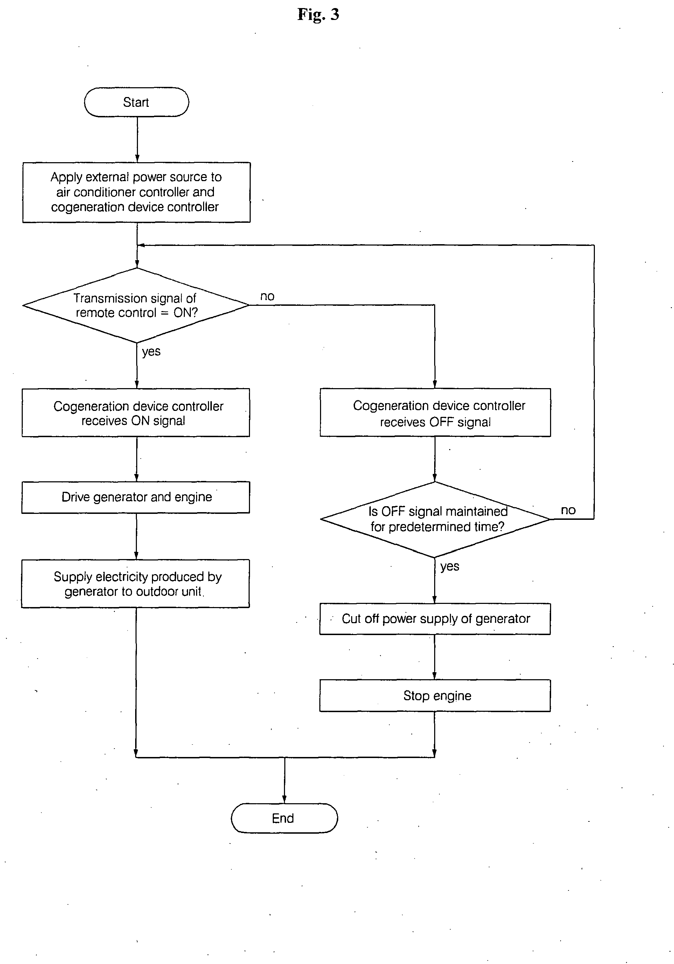

FIG. 3 is a sequential chart showing a method for controlling a cogeneration system in accordance with the present invention.

In the method for controlling the cogeneration system in accordance with the invention, as shown in FIG. 3, in a first step, power is applied from the external power source to the air conditioner controller and a cogeneration device controller.

In a second step, if a user operates the remote controls, the remote controls output operation signals of the indoor units.

Here, if the user operates the remote controls in order to turn on the indoor units, the remote controls output ON signals to the air conditioner controller.

The ON signal outputted from the remote controls is also received by the cogeneration device controller by RS-485 communication.

In a third step, the cogeneration device controller operates the cogeneration device according to the ON signals outputted from the remote controls.

That is, the cogeneration device controller operates the engine, and the generator is driven by the engine.

In a fourth step, the electricity produced by the generator is supplied to the outdoor units.

That is, the electricity produced by the generator is supplied to loads with relatively high power consumption, such as a compressor, a fan, a pump, etc. in the indoor units.

Accordingly, it is possible to make the best use of the electricity from the generator, and minimize the use of the external power source.

Furthermore, the compressor of the indoor units is pre-heated using waste heat of the cooling water that has cooled down the engine and waste heat of the exhaust gas exhausted from the engine, so that the efficiency of the compressor and the utilization efficiency of waste heat can be increased.

Meanwhile, in the second step, if the operation signals outputted from the plurality of remote controls to the cogeneration device are all OFF signals, and the OFF signals are maintained for a predetermined time, this is recognized as an operation stopped state of the indoor units.

Therefore, the cogeneration device controller stops the engine after cutting off the supply of the electricity produced by the generator to the outdoor units.

Although the cogeneration system and the method for controlling the same in accordance with the invention have been described with reference to the illustrated drawings, the present invention is not limited to the embodiments and drawings disclosed in this specification, and can be applied within the scope of the technical concept of the present invention.

The cogeneration system and the method for controlling the same in accordance with the invention have an advantage that it is easy to operate the cogeneration device because the operation of the cogeneration device can be controlled according to operation signals of the air conditioner, and have an effect that it is possible to make the best use of the generated electricity of the cogeneration device through an interconnection between the air conditioner and the cogeneration device.

Additionally, the air conditioner controller and the cogeneration device controller are supplied with electricity from an external power source, and the compressor, fan, etc. of the air conditioner are supplied with electricity from the generator, so that it is possible to properly use the generated electricity of the cogeneration system and the external power source, thereby maximizing the utilization of the generated electricity of the cogeneration device and minimizing the utilization factor of the external power source by

Additionally, the suction side of the compressor is pre-heated using waste heat recovered b the engine of the cogeneration device, so that the efficiency of the compressor is improved, to thus reduce unnecessary waiting time when driving the cogeneration device.

Additionally, if the operation signals outputted to the cogeneration device controller from a plurality of remote controls are all OFF signals, and the OFF signals are maintained for a predetermined time, the operation of the cogeneration device is stopped, thereby preventing a malfunction thereof.

## Claims

1. A cogeneration system, comprising:
a cogeneration device for supplying at least one of electricity and heat to an air conditioner; and
a cogeneration device controller for controlling the operation of the cogeneration device according to operation signals from the air conditioner.

2. The cogeneration system of claim 1, wherein the cogeneration device controller is supplied with electricity from an external power source.

3. The cogeneration system of claim 1, further comprising an air conditioner controller supplied with electricity from an en external power source, for controlling the air conditioner.

4. The cogeneration system of claim 1, wherein the air conditioner comprises an indoor unit supplied with electricity from an external power source and an outdoor unit supplied with electricity from the generator, and
the cogeneration device controller controls the operation of the cogeneration device according to operation signals from the indoor unit.

5. The cogeneration system of claim 1, wherein the air conditioner comprises an indoor unit supplied with electricity from an external power source, an outdoor unit supplied with electricity from the generator, and a remote control for wirelessly operating the indoor unit, and
the cogeneration device controller controls the operation of the cogeneration device according to operation signals from the indoor unit.

6. The cogeneration system of claim 1, wherein the cogeneration device comprises a generator for generating electricity and a driving source for driving the generator and generating heat.

7. The cogeneration system of claim 6, wherein the cogeneration device controller controls the driving of the driving source according to the operation signals from the air conditioner.

8. The cogeneration system of claim 6, wherein the cogeneration device controller controls the power supply to the air conditioner from the generator according to the operation signals from the air conditioner.

9. The cogeneration system of claim 6, further comprising a waste heat recovery unit for supplying waste heat recovered from the driving source to the air conditioner.

10. The cogeneration system of claim 1, wherein the air conditioner and the cogeneration device controller perform data communication by the RS-485 communication protocol.

11. The cogeneration system of claim 1, further comprising a monitoring device connected to the cogeneration device controller, for monitoring the operations of the cogeneration device and the air conditioner.

12. A method for controlling a cogeneration system, comprising:
applying power to an indoor unit of an air conditioner and a controller of a cogeneration device from outside;
transmitting operation signals from the indoor unit of the air conditioner to the controller of the cogeneration device;
if the signal transmitted in the transmitting of operation signals is an ON signal, operating the cogeneration device by the controller of the cogeneration device; and
operating the cogeneration device to supply produced electricity to an outdoor unit of the air conditioner.

13. The method of claim 12, wherein if the operation signals outputted in the transmitting of an operation signal are OFF signals, the cogeneration device controller stops the cogeneration device.

14. The method of claim 12, wherein if the operation signals outputted in the transmitting of an operation signal are OFF signals, and the OFF signals are maintained for a predetermined time, the operation of the cogeneration device is stopped.

15. The method of claim 12, wherein if the operation signals outputted in the transmitting of operation signals are OFF signals, the power supply from the cogeneration device to the outdoor unit is cut off, and thereafter, the driving source of the cogeneration device is stopped.
